# EUROPÄISCHE PATENTSCHRIFT

(11) **EP 2 379 656 B1**
(45) Veröffentlichungstag und Bekanntmachung des Hinweises auf die Patenterteilung: **27.02.2013**
(21) Anmeldenummer: 09765107.9
(22) Anmeldetag: 08.12.2009
(51) Int. Cl.: C09D 175/06, C08G 18/42, C08G 18/62, C08G 18/40, C08G 18/79, C09D 201/00, B82Y 30/00, C08K 3/36, C08K 7/18, C08K 9/06, C08G 83/00

(54) **SCHNELLTROCKNENDE BESCHICHTUNGSMASSEN**
QUICK-DRYING COATING COMPOUNDS
COMPOSITIONS DE REVÊTEMENT À SÉCHAGE RAPIDE

(30) Priorität: 17.12.2008 EP 08172008
(43) Veröffentlichungstag der Anmeldung: 26.10.2011
(73) Patentinhaber: BASF SE, 67056 Ludwigshafen (DE)
(72) Erfinder: HABERECHT, Monika, 67063 Ludwigshafen (DE); STEINBRECHER, Angelika Maria, 70193 Stuttgart (DE); KUJAT, Christof, 67434 Neustadt (DE); TRAUT, Alexander, 68169 Mannheim (DE)
(86) Internationale Anmeldenummer: PCT/EP2009/066614
(87) Internationale Veröffentlichungsnummer: WO 2010/069818

(56) Entgegenhaltungen:
- EP-A- 1 905 790
- WO-A-2007/016234
- MARUTANI Y: "Two pack urethane paint compsn. for cars - comprises acrylic! resin, oligoester and isocyanate prepolymer acid and scuff resistance, good adhesion, etc" 9. August 1994 (1994-08-09), WPI / THOMSON HOST- WPI / THOMSON , XP002464955 Zusammenfassung

## Beschreibung

Die vorliegende Erfindung betrifft schnelltrocknende zweikomponentige Polyurethanbeschichtungsmassen, Verfahren zu deren Herstellung und deren Verwendung.

Zweikomponentige Polyurethanbeschichtungsmassen sind weit verbreitet beispielsweise zur Lackierung in der Automobilindustrie. An derartige Lackierungen werden hohe Anforderungen u.a. betreffend Kratzfestigkeit, Flexibilität und Härte gestellt.

Für die Verarbeitung bei der Lackierung ist eine schnelle Trocknung essentiell, da diese eine beschleunigte Weiterverarbeitung der lackierten Substrate ermöglicht.

Es ist bekannt, Beschichtungsmassen zur Erhöhung der Kratzfestigkeit nanopartikuläre Silikatpartikel beizumischen.

Aus der internationalen Anmeldung mit dem Aktenzeichen PCT/EP2008/056270 ist es bekannt, nanopartikuläres Silikat so zu modifizieren, daß es einfacher in Beschichtungsmassen einarbeitbar ist. Dabei werden auf der Silikatoberfläche funktionelle Gruppen aufgebracht, die in die Beschichtungsmasse einreagieren.

Die so erhaltenen Beschichtungsmassen zeigen keine besonderen Eigenschaften bzgl. ihrer Trocknungscharakteristik.

WO 2007/146353 A2 beschreibt die Dispergierung von nanopartikulären Silikapartikeln in Beschichtungsmassen mit Hilfe von verzweigten oder hyperverzweigten Oligomeren.

Die dabei eingesetzten verzweigten Oligomere fungieren hier als Dispergiermittel für die Silikapartikel und üben keinen signifikanten Effekt auf die Trocknung aus. Zudem agglomerieren die hier eingesetzten nanopartikulären Silikapartikeln während des Härtungsvorganges, so daß die Eigenschaften der nanoskaligen Primärpartikel verloren gehen.

Nachteilig an dem dort beschriebenen Verfahren ist, daß dort beschriebenen bevorzugten Bindemittel Silylgruppen tragen müssen, um eine optimale Kompatibilität von Nanopartikeln und Bindemittel zu gewährleisten.

Aufgabe der vorliegenden Erfindung war es, zweikomponentige Polyurethanbeschichtungsmassen zur Verfügung zu stellen, die eine gegenüber anderen zweikomponentigen Beschichtungsmassen verbesserte Trocknung aufweisen.

Die Aufgabe wurde gelöst durch zweikomponentige Polyurethanbeschichtungsmassen, enthaltend als Aufbaukomponenten
(A) mindestens ein Polyisocyanat, erhältlich durch Umsetzung mindestens eines monomeren Isocyanats,
(B) mindestens ein hydroxygruppenhaltiges Poly(meth)acrylatpolyol,
(C) mindestens ein hyperverzweigtes Polyesterpolyol,
   entweder erhältlich durch Polykondensation
   - mindestens einer Dicarbonsäure A₂ oder deren Derivate,
   - optional mindestens einer tri- oder höherfunktionellen Carbonsäure Aₓ mit x≥3 oder deren Derivate und
   - mindestens einem tri- oder höherfunktionellen Alkohol B_{y} mit y≥3, sowie
   - optional mindestens einem Diol B₂,
   oder erhältlich durch Polykondensation
   - mindestens einer tri- oder höherfunktionellen Carbonsäure Aₓ mit x≥3 oder deren Derivate
   - optional mindestens einer Dicarbonsäure A₂ oder deren Derivate, und
   - mindestens einem Diol B₂, sowie
   - optional mindestens einem tri- oder höherfunktionellen Alkohol B_{y} mit y≥3, und
(D) Silikatpartikel der Größe von 5 bis 150 nm, deren Oberfläche mit einer mindestens einfach alkoxylierten Silylverbindung (S) modifiziert sind.

Die erfindungsgemäßen Beschichtungsmassen zeigen eine gegenüber vergleichbaren zweikomponentigen Polyurethanbeschichtungsmassen beschleunigte Trocknung. Dabei wird die Härte der so erhaltenen Beschichtungen zumindest beibehalten. Bevorzugt zeigen die erfindungsgemäßen Beschichtungsmassen zusätzlich ein verbessertes reflow-Verhalten beim Erwärmen.

### Komponente (A): Mindestens ein Polyisocyanat, erhältlich durch Umsetzung mindestens eines monomeren Isocyanats

Als Komponente (A) wird mindestens ein, beispielsweise ein bis vier, bevorzugt ein bis drei, besonders bevorzugt ein bis zwei und ganz besonders bevorzugt genau ein Polyisocyanat eingesetzt, das durch Umsetzung mindestens eines monomeren Isocyanats erhältlich ist.

Die eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen. Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat),Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1 ,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 80:20 (w/w), bevorzugt im Verhältnis von ca. 70:30 bis 75:25 und besonders bevorzugt im Verhältnis von ca. 75:25.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1 ,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm. Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (A), zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten (A) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den andereren Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen (A). Diese Urethan- und/oder Allophanatgruppen aufweisenden Polyisocyanate haben im allgemeinen einen NCO-Gehalt von 12 bis 24 Gew.-% und eine mittlere NCO-Funktionalität von 2,5 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Zn-(II)-Verbindungen, jeweils in Anwesenheit von ein-, zwei- oder mehrwertigen, bevorzugt einwertigen Alkoholen, hergestellt werden.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, gegebenenfalls in Gegenwart von geeigneten Katalysatoren. Diese Biuret- oder Urethan-/Allophanatgruppen aufweisenden Polyisocyanate weisen im allgemeinen einen NCO-Gehalt von 18 bis 22 Gew.-% und eine mittlere NCO-Funktionalität von 2,8 bis 6 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-13 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyallkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform der vorliegenden Erfindung ist das Polyisocyanat (A) ausgewählt aus der Gruppe bestehend aus Isocyanuraten, Iminooxadiazindionen, Biureten, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten, insbesondere handelt es sich um ein isocyanuratgruppenhaltiges Polyisocyanat.

In einer besonders bevorzugten Ausführungsform handelt es sich bei dem Polyisocyanat (A) um Isocyanuratgruppen enthaltende Polyisocyanate von 1,6-Hexamethylendiisocyanat.

In einer weiteren besonders bevorzugten Ausführungsform handelt es sich bei dem Polyisocyanat (A) um ein Gemisch von Isocyanuratgruppen enthaltenden Polyisocyanaten von 1 ,6-Hexamethylendiisocyanat und von Isophorondiisocyanat.

In einer möglichen Ausführungsform handelt es sich bei dem Polyisocyanat (A) um ein Gemisch enthaltend niedrigviskose Polysiocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren zur Herstellung der Polyisocyanate kann erfolgen, wie in WO 2008/068198 beschrieben, dort besonders von Seite 20, Zeile 21 bis Seite 27, Zeile15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei.

Die Reaktion kann alternativ auch abgebrochen werden, wie in WO 2005/087828 von Seite 11, Zeile 12 bis Seite 12, Zeile 5 beschrieben, was hiermit durch Bezugnahme Bestandteil der vorliegenden Anmeldung sei.

Bei thermisch labilen Katalysatoren ist es weiterhin auch möglich, die Reaktion abzubrechen durch Erhitzen des Reaktionsgemischs auf eine Temperatur oberhalb von mindestens 80°C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat oder organische Carbonsäuren.

Diese Verbindungen werden pur oder verdünnt in geeigneter Konzentration, die zum Reaktionsabbruch erforderlich ist, zugegeben.

### Komponente (B): Mindestens ein hydroxygruppenhaltiges Poly(meth)acrylatpolyol

Bei der Komponente (B) handelt es sich um mindestens ein, beispielsweise ein bis vier, bevorzugt ein bis drei, besonders bevorzugt ein bis zwei und ganz besonders bevorzugt genau ein Poly(meth)acrylatpolyol. Dabei handelt es sich zumeist um Copolymerisate von im wesentlichen (Meth)Acrylsäureestern, beispielsweise C₁-C₂₀-Alkyl(meth)acrylaten, mit Hydroxyalkyl(meth)acrylaten, beispielsweise den Mono(meth)acrylsäureestern von 1,2-Propandiol, Ethylenglykol, 1,3-Propandiol, 1,4-Butandiol oder 1,6-Hexandiol.

Diese weisen vorzugsweise ein nach der Gelpermeationschromatographie bestimmbares Molekulargewicht Mₙ (Zahlenmittel) von 500 bis 50.000, insbesondere 1.000 bis 10.000 g/mol auf und eine Hydroxylzahl von 16,5 bis 264, vorzugsweise 33 bis 165 mg KOH/g Festharz.

Bevorzugte Komponenten (B) weisen OH-Zahlen, gemessen gemäß DIN 53240-2, von 15-250 mg KOH/g Festharz, bevorzugt 80-160 mg KOH/g auf.

Zusätzlich können die Bindemittel (B) eine Säurezahl gemäß DIN EN ISO 3682 bis 200 mg KOH/g, bevorzugt bis 150 und besonders bevorzugt bis 100 mg KOH/g aufweisen.

Die Komponenten (B) weisen bevorzugt ein Molekulargewicht Mₙ von mindestens 1000, besonders bevorzugt mindestens 2000 und ganz besonders bevorzugt mindestens 5000 g/mol auf. Das Molekulargewicht Mₙ kann prinzipiell nach oben unbegrenzt sein, bevorzugt bis 200.000, besonders bevorzugt bis zu 100.000 und ganz besonders bevorzugt bis zu 50.000 g/mol betragen.

Die Hydroxylgruppen aufweisenden Monomeren werden in solchen Mengen bei der Copolymerisation mitverwendet, daß die obengenannten Hydroxylzahlen der Polymerisate resultieren, die im übrigen im allgemeinen einem Hydroxylgruppengehalt der Polymerisate von 0,5 bis 8, vorzugsweise 1 bis 5 Gew.-% entsprechen. Im allgemeinen werden die hydroxyfunktionellen Comonomeren im Mengen von 3 bis 75, vorzugsweise 6 bis 47 Gew.-%, bezogen auf das Gesamtgewicht der eingesetzten Monomeren mitverwendet. Außerdem muß selbstverständlich darauf geachtet werden, daß im Rahmen der gemachten Angaben die Menge der hydroxyfunktionellen Monomeren so gewählt wird, daß Copolymerisate entstehen, die im statistischen Mittel pro Molekül mindestens zwei Hydroxylgruppen aufweisen.

Als Monomere genannt seien z.B. C₁-C₂₀-Alkyl(meth)acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen, α,β-ungesättigte Carbonsäuren und deren Anhydride und aliphatischen Kohlenwasserstoffen mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α, β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1 ,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4500, bevorzugt 250 bis 2000, Poly-1,3-propandiol oder Polypropylenglykol mit einem Molgewicht zwischen 134 und 2000 oder Polyethylenglykol mit einem Molgewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, 4-n-Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Comonomere wie z.B. Glycidylacrylat oder -methacrylat oder Monomere wie N-Methoxymethylacrylamid oder -meth-acrylamid können in geringen Mengen mitverwendet werden.

Bevorzugt sind Ester der Acrylsäure bzw der Methacrylsäure mit 1 bis 18, vorzugsweise 1 bis 8 Kohlenstoffatomen im Alkoholrest wie z.B. Methylacrylat. Ethylacrylat, Isopropylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomerer.

Die hydroxygruppentragenden Monomere werden in die Copolymerisation der hydroxygruppentragenden (Meth)Acrylate im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den hydroxygruppentragenden Monomere zu mehr als 60 Gew% aus C₁-C₁₀-Alkyl(meth)acrylaten, Styrol und dessen Derivaten oder deren Mischungen bestehen.

Die Herstellung der Polymerisate kann durch Polymerisation nach üblichen Verfahren durchgeführt werden. Vorzugsweise erfolgt die Herstellung der Polymerisate in einer Emulsionspolymerisation oder in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Gegebenenfalls wird anschließend noch nachaktiviert, um die Polymerisation bis zu einem Umsatz von mindestens 99 % durchzuführen.

Als Lösungsmittel kommen beispielsweise Aromaten, wie Solventnaphtha, Benzol, Toluol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Ketone wie Aceton, Methylethylketon, halogenhaltige Lösemittel wie Methylenchlorid oder Trichlormonofluorethan in Betracht.

### Komponente (C): Mindestens ein hyperverzweigtes Polyesterol

Bei der Komponente (C) handelt es sich um mindestens ein, beispielsweise ein bis vier, bevorzugt ein bis drei, besonders bevorzugt ein bis zwei und ganz besonders bevorzugt genau ein
hochfunktionellen, hoch- oder hyperverzweigten Polyesterpolyol mit einem Molekulargewicht Mₙ von mindestens 500 g/mol und
einer Polydispersität M_{w}/Mₙ von 1,2 - 50 erhältlich durch
entweder erhältlich durch Polykondensation
- mindestens einer Dicarbonsäure A₂ oder deren Derivate,
- optional mindestens einer tri- oder höherfunktionellen Carbonsäure Aₓ mit x≥3 oder deren Derivate und
- mindestens einem tri- oder höherfunktionellen Alkohol B_{y} mit y≥3, sowie
- optional mindestens einem Diol B₂, bevorzugt in Abwesenheit von Diol B₂,
oder erhältlich durch Polykondensation
- mindestens einer tri- oder höherfunktionellen Carbonsäure Aₓ mit x≥3 oder deren Derivate
- optional mindestens einer Dicarbonsäure A₂ oder deren Derivate, bevorzugt in Abwesenheit einer Dicarbonsäure A₂ oder deren Derivate, und
- mindestens einem Diol B₂, sowie
- optional mindestens einem tri- oder höherfunktionellen Alkohol B_{y} mit y≥3.

Unter dem Begriff "in Abwesenheit" wird im Rahmen dieser Schrift verstanden, daß weniger als 20 mol% aller OH-Gruppen der hydroxygruppenhaltigen Bausteine B_{y} und B₂ aus difunktionellen Alkoholen B₂ stammen, bevorzugt weniger als 10 mol%, besonders bevorzugt weniger als 5 mol% und ganz besonders bevorzugt 0 mol%.

Das gleiche gilt analog auch für die Säurekomponente A₂.

Die Polyesterpolyole (C) weisen in der Regel eine Viskosität von nicht mehr als 100 Paxs auf (gemessen bei 80 °C gemäß DIN EN 3219).

Die Polyesterpolyole (C) besitzen eine Summe von Säurezahl und OH-Zahl gemäß DIN 53240, Teil 2 von bis zu 600 mg KOH/g.

Bevorzugt beträgt die OH-Zahl 100 bis 500, besonders bevorzugt 150 bis 450 und ganz besonders bevorzugt 150 bis 400 mg KOH/g.

Bevorzugt beträgt die Säurezahl nicht mehr als 100, besonders bevorzugt 5 bis 100 und ganz besonders bevorzugt 10 bis 90 mg KOH/g.

Die Polyesterpolyole (C) weisen in der Regel eine Glasübergangstemperatur von -60 bis 100 °C, bevorzugt -50 bis 90 °C und besonders bevorzugt -40 bis 80 °C auf.

Die Polyesterole (C) haben ein Molekulargewicht Mₙ von mindestens 500, bevorzugt mindestens 600 und besonders bevorzugt 750 g/mol. Die obere Grenze des Molekulargewichts Mₙ ist bevorzugt 100.000 g/mol, besonders bevorzugt beträgt es nicht mehr als 80.000 und ganz besonders bevorzugt nicht mehr als 30.000 g/mol.

Die Angaben zur Polydispersität sowie zum zahlenmittleren und gewichtsmittleren Molekulargewicht Mₙ und M_{w} beziehen sich hier auf gelpermeationschromatographische Messungen, wobei Polymethylmethacrylat als Standard und Tetrahydrofuran oder Hexafluorisopropanol als Elutionsmittel verwendet wurden. Die Methode ist im Analytiker Taschenbuch Bd. 4, Seiten 433 bis 442 , Berlin 1984 beschrieben.

Die Polydispersität der Polyesterole (C) beträgt 1,2 bis 50, bevorzugt 1,4 bis 40, besonders bevorzugt 1,5 bis 30 und ganz besonders bevorzugt bis 10.

Unter hyperverzweigten Polyestern werden im Rahmen dieser Erfindung unvernetzte Polyester mit Hydroxy- und optional Carboxygruppen verstanden, die sowohl strukturell als auch molekular uneinheitlich sind. Die Polyesterole sind bevorzugt unvernetzt, was im Rahmen dieser Schrift bedeutet, daß ein Vernetzungsgrad von weniger als 15 Gew.%, bevorzugt von weniger als 10 Gew.%, bestimmt über den unlöslichen Anteil des Polymeren, vorhanden ist.

Der unlösliche Anteil des Polymeren wurde bestimmt durch vierstündige Extraktion mit dem gleichen Lösungsmittel, wie es für die Gelpermeationschromatographie verwendet wird, also Tetrahydrofuran oder Hexafluorisopropanol, je nachdem, in welchem Lösungsmittel das Polymer besser löslich ist, in einer Soxhlet-Apparatur und nach Trocknung des Rückstandes bis zur Gewichtskonstanz Wägung des verbliebenen Rückstandes.

Die Polyesterole (C) sind üblicherweise sehr gut löslich, d.h. man kann bei 25 °C klare Lösungen mit einem Gehalt bis zu 50 Gew.-%, in einigen Fällen sogar bis zu 80 Gew.-%, der erfindungsgemäßen Polyester in Tetrahydrofuran (THF), Ethylacetat, n-Butylacetat, Ethanol und zahlreichen anderen Lösemitteln darstellen, ohne dass mit bloßem Auge Gelpartikel detektierbar sind. Dies zeigt den geringen Vernetzungsgrad der erfindungsgemäßen Polyester.

Hyperverzweigte Polyester können auf der einen Seite ausgehend von einem Zentralmolekül analog zu Dendrimeren, jedoch mit uneinheitlicher Kettenlänge zwischen den möglichen Verzweigungpunkten aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chemistry - A European Journal, 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl der Endgruppen pro Molekül, 10 bis 99,9 %, bevorzugt 20 bis 99 %, besonders bevorzugt 20 - 95 % beträgt. Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30 - 35.

Zu den Bausteinen ist im Einzelnen das Folgende auszuführen:
Zu den Dicarbonsäuren (A₂) gehören beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie zum Beispiel Phthalsäure, 1-sophthalsäure oder Terephthalsäure verwendet werden. Auch ungesättigte Dicarbonsäuren, wie Maleinsäure oder Fumarsäure sind einsetzbar, wenn auch weniger bevorzugt.

Die genannten Dicarbonsäuren können auch substituiert sein mit einem oder mehreren Resten, ausgewählt aus
C₁-C₂₀-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, Trimethylpentyl, n-Nonyl oder n-Decyl, n-Dodecyl, n-Octadecyl und n-Eicosyl.
C₃-C₁₂-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
C₆-C₁₄-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.
Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Octadecenylbernsteinsäure und dessen Anhydrid (siehe unten), 2-Ethylbernsteinsäure, 2-Phenylbernsteinsäure, Itaconsäure, 3,3-Dimethylglutarsäure.

Weiterhin lassen sich Gemische von zwei oder mehreren der vorgenannten Dicarbonsäuren einsetzen.

Die Dicarbonsäuren lassen sich entweder als solche oder in Form von Derivaten einsetzen.

Unter Derivaten werden bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

C₁-C₄-Alkyl bedeutet im Rahmen dieser Schrift Methyl, Ethyl, iso-Propyl, n-Propyl, n-Butyl, iso-Butyl, sek-Butyl und tert-Butyl, bevorzugt Methyl, Ethyl und n-Butyl, besonders bevorzugt Methyl und Ethyl und ganz besonders bevorzugt Methyl.

Es ist auch möglich, ein Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Dicarbonsäuren einzusetzen.

Besonders bevorzugt setzt man als Bausteine A₂ Malonsäure, Sebacinsäure, Bernsteinsäure, Glutarsäure, Adipinsäure, 1,2-, 1,3- oder 1,4-Cyclohexandicarbonsäure (Hexahydrophthalsäuren), Phthalsäure, Isophthalsäure, Terephthalsäure oder deren Mono- oder Dialkylester ein.

Ganz besonders bevorzugt sind Sebacinsäure, Adipinsäure, 1,2- und 1,4-Cyclohexandicarbonsäure.

Umsetzbare Tricarbonsäuren oder Polycarbonsäuren (Aₓ) sind beispielsweise Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren.

Der Index "x" steht dabei für die Funktionalität an Carboxygruppen, für die "A" steht, wobei gilt x≥3, bevorzugt x=3 oder 4 und besonders bevorzugt x=3.

Tricarbonsäuren oder Polycarbonsäuren (Aₓ) lassen sich in der erfindungsgemäßen Reaktion entweder als solche oder aber in Form von Derivaten einsetzen.

Unter Derivaten werden bevorzugt verstanden
- die betreffenden Anhydride in monomerer oder auch polymerer Form,
- Mono- Di- oder Trialkylester, bevorzugt Mono- Di-, oder Tri-C₁-C₄-alkylester, besonders bevorzugt Mono-, Di- oder Trimethylester oder die entsprechenden Mono-, Di- oder Triethylester,
- ferner Mono-, Di- und Trivinylester sowie gemischte Ester, bevorzugt gemischte Ester mit unterschiedlichen C₁-C₄-Alkylkomponenten, besonders bevorzugt gemischte Methylethylester.

Im Rahmen der vorliegenden Erfindung ist es auch möglich, ein Gemisch aus einer Tri- oder Polycarbonsäure und einem oder mehreren ihrer Derivate einzusetzen, zum Beispiel eine Mischung aus Pyromellitsäure und Pyromellitsäuredianhydrid. Gleichfalls ist es im Rahmen der vorliegenden Erfindung möglich, ein Gemisch mehrerer verschiedener Derivate von einer oder mehreren Tri- oder Polycarbonsäuren einzusetzen, zum Beispiel eine Mischung aus 1,3,5-Cyclohexantricarbonsäure und Pyromellitsäuredianhydrid.

Als Diole (B₂) gemäß der vorliegenden Erfindung verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylen-polypropylenglykole, wobei die Abfolge der Ethylenoxid- der Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voranstehenden Verbindungen. Dabei kann eine oder auch beide Hydroxylgruppen in den vorstehend genannten Diolen durch SH-Gruppen substituiert werden. Bevorzugt eingesetzte Diols sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol und Tripropylenglykol.

Die zweiwertigen Alkohole B₂ können optional noch weitere Funktionalitäten wie beispielsweise Carbonyl, Carboxy, Alkoxycarbonyl oder Sulfonyl enthalten, wie beispielsweise Dimethylolpropionsäure oder Dimethylolbuttersäure, sowie deren C₁-C₄-Alkylester, bevorzugt weisen die Alkohole B₂ jedoch keine weiteren Funktionalitäten auf.

Mindestens trifunktionelle Alkohole (B_{y}) umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zucker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid und/oder Butylenoxid.

Der Index "y" steht dabei für die Funktionalität an Hydroxygruppen, für die "B" steht, wobei gilt y≥3, bevorzugt y=3 oder 4 und besonders bevorzugt y=3.

Dabei sind Glycerin, Diglycerin, Triglycerin, Trimethylolethan, Trimethylolpropan, Di-Trimethylolpropan, 1,2,4-Butantriol, Pentaerythrit, Tris(hydroxyethyl)isocyanurat sowie deren Polyetherole auf Basis von Ethylenoxid und/oder Propylenoxid besonders bevorzugt.

Ganz besonders bevorzugt sind Glycerin, Trimethylolpropan, Di-Trimethylolpropan und Pentaerythrit.

Die Polyester können in Substanz oder in Gegenwart eines Lösemittels hergestellt werden. Als Lösemittel geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders Ether geeignet, wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

In einer bevorzugten Ausführungsform wird die Reaktion frei von Lösungsmittel durchgeführt.

Zur Durchführung des Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Ä, MgSO₄ und Na₂SO₄. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Weiterhin kann die Abtrennung durch Strippen erfolgen, beispielsweise durch Durchleiten eines unter den Reaktionsbedingungen inerten Gases durch das Reaktionsgemisch erfolgen, gegebenenfalls zusätzlich zu einer Destillation. Als Inertgase eignen sich vorzugsweise Stickstoff, Edelgase, Kohlendioxid oder Verbrennungsgase.

Man kann das Verfahren in Abwesenheit von Katalysatoren durchführen. Vorzugsweise arbeitet man jedoch in Gegenwart von mindestens einem Katalysator. Die sind bevorzugt saure anorganische, metallorganische oder organische Katalysatoren oder Gemische aus mehreren sauren anorganischen, metallorganischen oder organischen Katalysatoren.
Als saure anorganische Katalysatoren im Sinne der vorliegenden Erfindung sind beispielsweise Schwefelsäure, Sulfate und Hydrogensyulfate, wie Natriumhydrogensulfat, Phosphorsäure, Phosphonsäure, hypophosphorige Säure, Aluminiumsulfathydrat, Alaun, saures Kieselgel (pH ≤ 6, insbesondere 5) und saures Aluminiumoxid zu nennen. Weiterhin sind beispielsweise Alumiumverbindungen der allgemeinen Formel Al(OR³)₃ und Titanate der allgemeinen Formel Ti(OR³)₄ als saure anorganische Katalysatoren einsetzbar, wobei die Reste R³ jeweils gleich oder verschieden sein können und unabhängig voneinander gewählt sind aus

C₁-C₂₀-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl, n-Decyl, n-Dodecyl, n-Hexadecyl oder n-Octadecyl.

C₃-C₁₂-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R³ in Al(OR³)₃ bzw. Ti(OR³)₄ jeweils gleich und gewählt aus n-Butyl, Isopropyl oder 2-Ethylhexyl.

Bevorzugte saure metallorganische Katalysatoren sind beispielsweise gewählt aus Dialkylzinnoxiden R³₂SnO oder Dialkylzinnestern R³₂Sn(OR⁴)₂ wobei R³ wie oben stehend definiert ist und gleich oder verschieden sein kann.

R⁴ kann die gleichen Bedeutungen haben wie R³ und zusätzlich C₆-C₁₂-Aryl sein, beispielsweise Phenyl, o-, m- oder p-Tolyl, Xylyl oder Naphthyl. R⁴ kann jeweils gleich oder verschieden sein.

Beispiele sind für zinnorganische Katalysatoren sind Zinn(II)-n-octanoat, Zinn-(II)-2-ethylhexanoat, Zinn-(II)-laurat, Dibutylzinnoxid, Diphenylzinnoxid, Dibutylzinndichlorid, Dibutylzinndiacetat, Dibutylzinndilaurat, Dibutylzinndimaleat oder Dioctylzinndiacetat.

Besonders bevorzugte Vertreter für saure metallorganische Katalysatoren sind Dibutylzinnoxid, Diphenylzinnoxid und Dibutylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form, zum Beispiel an Kieselgel oder an Zeolithen, einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Enzyme oder Zersetzungsprodukte von Enzymen gehören nicht zu den sauren organischen Katalysatoren im Sinne der vorliegenden Erfindung. Gleichfalls gehören die erfindungsgemäß umgesetzten Dicarbonsäuren nicht zu den sauren organischen Katalysatoren im Sinne der vorliegenden Erfindung.

Zur Durchführung des erfindungsgemäßen Verfahrens verzichtet man vorteilhaft auf den Einsatz von Enzymen.

Das erfindungsgemäße Verfahren wird vorzugsweise unter Inertgasatmosphäre, d.h. einem unter den Reaktionsbedingungen inerten Gas, durchgeführt, beispielsweise unter Kohlendioxid, Verbrennungsgasen, Stickstoff oder Edelgas, unter denen insbesondere Argon zu nennen ist.

Das Verfahren wird bei Temperaturen von 60 bis 250°C durchgeführt. Vorzugsweise arbeitet man bei Temperaturen von 80 bis 200, besonders bevorzugt bei 100 bis 180°C.

Die Druckbedingungen des erfindungsgemäßen Verfahrens sind in der Regel unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei verringertem oder Atmosphärendruck, besonders bevorzugt bei Atmosphärendruck.

Die Umsetzungsdauer des erfindungsgemäßen Verfahrens beträgt üblicherweise 10 Minuten bis 48 Stunden, bevorzugt 30 Minuten bis 24 Stunden und besonders bevorzugt 1 bis 12 Stunden.

Nach beendeter Reaktion lassen sich die hochfunktionellen hoch- und hyperverzweigten Polyester leicht isolieren, beispielsweise durch Abfiltrieren des Katalysators und gegebenenfalls Abziehen des Lösemittels, wobei man das Abziehen des Lösemittels üblicherweise bei vermindertem Druck durchführt. Weitere gut geeignete Aufarbeitungsmethoden sind Ausfällen des Polymeren nach Zugabe von Wasser und anschließendes Waschen und Trocknen.

Die weitere Aufarbeitung des Reaktionsgemischs kann beispielsweise erfolgen, wie beschrieben in WO 2005/118677 A1, dort besonders von Seite 13, Zeile 18 bis Seite 17, Zeile 5, die hiermit durch Bezugnahme Bestandteil der vorliegenden Beschreibung seien.

In einer weiteren bevorzugten Ausführungsform können die erfindungsgemäßen Polyester neben den bereits durch die Reaktion erhaltenden funktionellen Gruppen weitere funktionelle Gruppen aufweisen. Eine Funktionalisierung kann dabei während des Molekulargewichtsaufbaus oder auch nachträglich, d.h. nach Beendigung der eigentlichen Umsetzung erfolgen, bevorzugt nachträglich. Dies bedeutet, daß der Umsatz der Komponenten A₂, B₂, Aₓ und/oder B_{y} zu mindestens 75%, bevorzugt zu mindestens 80, besonders bevorzugt zu mindestens 85, ganz besonders bevorzugt zu mindestens 90, insbesondere zu mindestens 95 und speziell zu mindestens 97% abgeschlossen ist. Eine Funktionalisierung mit gesättigten oder ungesättigten Monocarbonsäuren während des Molekulargewichtsaufbaus ist dabei bevorzugt ausgeschlossen.

Gibt man vor oder während des Molekulargewichtsaufbaus Komponenten zu, die neben Hydroxyl- oder Carboxylgruppen weitere funktionelle Gruppen oder funktionelle Elemente besitzen, so erhält man ein Polyester-Polymer mit statistisch verteilten von den Carboxyl-oder Hydroxylgruppen verschiedenen Funktionalitäten.

Funktionelle Gruppen können beispielsweise weiterhin sein Ethergruppen, Carbonatgruppen, Urethangruppen, Harnstoffgruppen, Thiolgruppen, Thioethergruppen, Thioestergruppen, Keto- oder Aldehydgruppen, mono-, di-, oder trisubstituierte Aminogruppen, Nitril- oder lsonitrilgruppen, Carbonsäureamidgruppen, Sulfonamidgruppen, Silangruppen oder Siloxangruppen, Sulfonsäure-, Sulfensäure- oder Sulfinsäuregruppen, Phosphonsäuregruppen, Vinyl- oder Allylgruppen oder Lactongruppen.

Derartige Effekte lassen sich zum Beispiel durch Zusatz von funktionalisierten Bausteinen E als Verbindungen während der Polykondensation erzielen, die neben Hydroxylgruppen oder Carboxylgruppen weitere funktionelle Gruppen oder funktionelle Elemente, wie Mercaptogruppen, primäre, sekundäre oder tertiäre Aminogruppen, Ethergruppen, Carbonylgruppen, Sulfonsäuren oder Derivate von Sulfonsäuren, Sulfinsäuren oder Derivate von Sulfinsäuren, Phosphonsäuren oder Derivate von Phosphonsäuren, Phosphinsäuren oder Derivate von Phosphinsäuren, Silangruppen, Siloxangruppen, tragen. Zur Modifikation mittels Amid-Gruppen lassen sich bei der Veresterung beispielsweise Ethanolamin, Propanolamin, lsopropanolamin, 2-(Butylamino)ethanol, 2-(Cyclohexylamino)ethanol, 2-Amino-1-butanol, 2-(2'-Aminoethoxy)ethanol oder höhere Alkoxylierungsprodukte des Ammoniaks, 4-Hydroxypiperidin, 1-Hydroxyethylpiperazin, Diethanolamin, Dipropanolamin, Diisopropanolamin, Tris(hydroxymethyl)-aminomethan, Tris(hydroxyethyl)aminomethan, Ethylendiamin, Propylendiamin, Hexamethylendiamin oder Isophorondiamin zusätzlich verwenden.

Für die Modifikation mit Mercaptogruppen lässt sich zum Beispiel Mercaptoethanol einsetzten. Tertiäre Aminogruppen lassen sich zum Beispiel durch Einbau von N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Reaktion mit langkettigen Alkandiolen lassen sich langkettige Alkylreste einbringen, die Reaktion mit Alkyl- oder Aryldiisocyanaten generiert Alkyl-, Aryl- und Urethangruppen aufweisende Polyester.

Eine nachträgliche Funktionalisierung kann man erhalten, indem der erhaltene hochfunktionelle, hoch- oder hyperverzweigte Polyester in einem zusätzlichen Verfahrensschritt mit einem geeigneten Funktionalisierungsreagenz, welches mit den OH- und/oder Carboxyl-Gruppen des Polyesters reagieren kann, umsetzt.

Eine Funktionalisierung von hydroxygruppenhaltigen erfindungsgemäßen Polyestern mit gesättigten oder ungesättigten, aliphatischen, cycloaliphatischen, araliphatischen oder aromatischen Monocarbonsäuren F kann bevorzugt ausschließlich nachträglich, d.h. nach Beendigung der eigentlichen Umsetzung in einem gesonderten Schritt erfolgen.

Geeignete gesättigte Monocarbonsäuren F können 1 bis 30 Kohlenstoffatome umfassen, bevorzugt 2 bis 30, besonders bevorzugt 4 bis 25, ganz besonders bevorzugt 6 bis 20 und insbesondere 8 bis 20 Kohlenstoffatome.

Beispiele für geeignete gesättigte Monocarbonsäuren F sind Ameisensäure, Essigsäure, Propionsäure, Buttersäure, Pivalinsäure, Capronsäure, 2-Ethylhexansäure, Octansäure, Isononansäure, Caprinsäure, Undecansäure, Laurinsäure, Myristinsäure, Pentadecansäure, Palmitinsäure, Margarinsäure, Stearinsäure, Nonadecansäure, Arachinsäure, Behensäure, Ölsäure, Linolsäure, Linolensäure, Benzoesäure, α- oder β-Naphthalinsäure.

Geeignete α,β-ungesättigte Monocarbonsäuren F können 3 bis 20 Kohlenstoffatome umfassen, bevorzugt 3 bis 10, besonders bevorzugt 3 bis 6, ganz besonders bevorzugt 3 bis 5 und insbesondere 3 bis 4 Kohlenstoffatome.

Beispiele für geeignete α,β-ungesättigte Monocarbonsäuren F sind Acrylsäure, Methacrylsäure, Ethacrylsäure, α-Chloracrylsäure, Maleinsäure, Fumarsäure, Itaconsäure, Crotonsäure, Citraconsäure, Mesaconsäure oder Glutaconsäure, bevorzugt sind Acrylsäure, Methacrylsäure, Maleinsäure, Fumarsäure, Itaconsäure und Crotonsäure, besonders bevorzugt sind Acrylsäure, Methacrylsäure, Maleinsäure, Fumarsäure und Crotonsäure, ganz besonders bevorzugt sind Acrylsäure und Methacrylsäure und insbesondere Acrylsäure.

Die Umsetzung mit gesättigten oder ungesättigten Monocarbonsäuren F kann statt mit den Carbonsäuren auch mit deren Derivaten erfolgen, beispielsweise mit deren Anhydriden, Chloriden oder Estern, bevorzugt mit deren Anhydriden oder Estern, besonders bevorzugt mit deren Estern mit C₁-C₄-Alkylalkoholen, ganz besonders bevorzugt mit deren Methylestern.

Eine Umsetzung im Sinne einer Veresterung kann beispielsweise in Gegenwart mindestens eines Veresterungskatalysators erfolgen, wie beispielsweise Schwefelsäure, Aryl- oder Alkylsulfonsäuren oder Gemische davon. Beispiele für Arylsulfonsäuren sind Benzolsulfonsäure, para-Toluolsulfonsäure oder Dodecylbenzolsulfonsäure, Beispiele für Alkylsulfonsäuren sind Methansulfonsäure, Ethansulfonsäure oder Trifluormethansulfonsäure. Auch stark saure Ionentauscher oder Zeolithe sind als Veresterungskatalysatoren einsetzbar. Bevorzugt sind Schwefelsäure und Ionentauscher.

Die Temperatur der Reaktion beträgt in der Regel 40 - 160 °C, es kann sinnvoll sein, während der Reaktion entstehendes Wasser mit Hilfe eines azeotropbildenden Lösungsmittels zu entfernen, wie beispielsweise n-Pentan, n-Hexan, n-Heptan, Cyclohexan, Methylcyclohexan, Benzol, Toluol oder Xylol.

Falls das im Reaktionsgemisch enthaltene Wasser nicht über ein azeotropbildendes Lösungsmittel entfernt wird, so ist es möglich, dieses über Strippen mit einem inerten Gas, bevorzugt einem sauerstoffhaltigen Gas, besonders bevorzugt mit Luft oder Magerluft zu entfernen.

Eine Umsetzung im Sinne einer Umesterung kann beispielsweise in Gegenwart mindestens eine Umesterungskatalysators erfolgen, beispielsweise Metallchelatverbindungen von z. B. Hafnium, Titan, Zirkon oder Calcium, Alkali- und Magnesiumalkoholate, organische Zinnverbindungen oder Calcium- und Lithiumverbindungen, beispielsweise -Oxide, -Hydroxyde, -Carbonate oder-Halogenide, vorzugsweise jedoch Titan-, Magnesium- oder Aluminiumalkoholate.

Der bei der Umesterung freigesetzte Alkohol kann beispielsweise durch Destillation, Strippen oder Anlegen von Vakuum entfernt werden.

Die Reaktionstemperatur beträgt in der Regel 80 - 140°C.

Weiterhin können Hydroxylgruppen enthaltende hochfunktionelle Polyester auch durch Umsetzung mit Alkylenoxiden, zum Beispiel Ethylenoxid, Propylenoxid oder iso-Butylenoxid, in hochfunktionelle Polyester-Polyetherpolyole überführt werden. Diese Verbindungen können dann beispielsweise wasserlöslich erhalten werden.

### Komponente (D): Silikatpartikel der Größe von 5 bis 150 nm, deren Oberfläche mit einer mindestens einfach alkoxylierten Silylverbindung (S) modifiziert sind

Die Silikatpartikel (D) werden zur besseren Kompatibilität mit den anderen Komponenten der Beschichtungsmasse an ihrer Oberfläche mit mindestens einer, bevorzugt genau einer Verbindung (S) umgesetzt, was eine verbesserte Mischbarkeit, Verteilung und/oder Stabilität in der Beschichtungsmasse bewirkt.

Die Silikapartikel (D) sind beispielsweise erhältlich durch Versetzen eines wäßrigen Kieselsols (K) mit einem mittleren Partikeldurchmesser von 5 bis 150 nm mit einem Gehalt an Kieselsäure, berechnet als SiO₂, von 10 bis 60 Gew% bei einem pH-Wert von 2 bis 4 mit mindestens einer Verbindung (S), die mindestens eine mindestens einfach alkoxylierte Silylgruppe und mindestens eine hydrophobe Gruppe aufweist, in einer Menge von 0,1 bis 20 µmol pro m² Oberfläche von (K).

Die eingesetzte wäßrige kolloidale Lösung (K) von Polykieselsäureteilchen (Kieselsol) enthalten Teilchen mit einem mittleren Partikeldurchmesser von 1 bis 150 nm, bevorzugt 2 bis 120, besonders bevorzugt 3 bis 100, ganz besonders bevorzugt 4 bis 80, insbesondere 5 bis 50 und speziell 8 bis 40 nm.

Der Gehalt an Kieselsäure, berechnet als SiO₂, beträgt von 10 bis 60 Gew% , bevorzugt von 20 bis 55, besonders bevorzugt 25 bis 40 Gew%. Es sind auch Kieselsole mit einem geringeren Gehalt einsetzbar, jedoch muß der Mehrgehalt an Wasser dann in einem späteren Schritt destillativ abgetrennt werden.

Bei den wäßrigen Lösungen (K) handelt es sich um kolloidale Lösungen von Polykieselsäure, die gegebenenfalls zu einem geringen Teil mit Alkalimetall-, Erdalkalimetall-, Ammonium-, Aluminium-, Eisen(II)-, Eisen(III)- und/oder Zirkoniumionen stabilisiert sein können, bevorzugt Alkalimetall-, Erdalkalimetall-, Ammonium- und/oder Eisen (I-II)ionen, besonders bevorzugt Alkalimetall-, Erdalkalimetall- und/oder Ammoniumionen, ganz besonders bevorzugt Alkalimetall- und/oder Erdalkalimetallionen und insbesondere Alkalimetallionen.

Unter den Alkalimetallionen sind Natrium- und/oder Kaliumionen bevorzugt, besonders bevorzugt sind Natriumionen.

Unter den Erdalkalimetallionen sind Magnesium-, Calcium- und/oder Berylliumionen bevorzugt, besonders bevorzugt sind Magnesium- und/oder Calciumionen, ganz besonders bevorzugt sind Magnesiumionen.

Das molare Verhältnis von Metallionen zu Siliziumatomen in (K) beträgt von 0:1 bis 0,1:1, bevorzugt von 0,002 bis 0,04 : 1.

Die eingesetzten Kieselsole (K) weisen nach Einstellen des pH-Wertes einen pH-Wert der wäßrigen Phase von 2 bis 4, bevorzugt von 2 bis 3 auf.

Unter einer wäßrigen kolloidalen Lösung wird in dieser Schrift eine Lösung von gegebenenfalls stabilisierten Kieselsäurepartikeln mit einem mittleren Teilchendurchmesser zwischen 1 und 150 nm verstanden, die sich auch bei Lagern über einen Zeitraum von einem Monat bei 20 °C nicht absetzt.

Unter einem Sol wird in dieser Schrift eine kolloiddisperse, inkohärente (d.h. jedes Teilchen ist frei beweglich) Lösung eines festen Stoffes in Wasser verstanden, hier als Kieselsol eine kolloiddisperse Lösung von Siliziumdioxid in Wasser.

Die erfindungsgemäß eingesetzten sauren wäßrigen Kieselsole (K) können beispielsweise auf drei verschiedenen Arten erhalten werden:
- durch Ansäuern der korrespondierenden alkalischen Kieselsole,
- durch Herstellung aus niedermolekularen Kieselsäuren, bevorzugt Wasserglas, d.h. salzartigen Teilchen mit einem Durchmesser unter 1 nm, oder
- durch Kondensation von Estern niedermolekularer Kieselsäuren.

Die wäßrigen Lösungen von alkalischen Kieselsolen weisen in der Regel einen pH-Wert von 7 bis 11, bevorzugt von 8 bis 11, besonders bevorzugt von 8 bis 10 und ganz besonders bevorzugt von 9 bis 10 auf. Diese alkalischen Kieselsole sind kommerziell erhältlich und stellen mithin ein leicht verfügbares und bevorzugtes Ausgangsprodukt für das erfindungsgemäße Verfahren dar.

Die Teilchen in diesen alkalischen Kieselsolen weisen zumeist einen mittleren Partikeldurchmesser von 1 bis 150 nm, bevorzugt 2 bis 120, besonders bevorzugt 3 bis 100, ganz besonders bevorzugt 4 bis 80, insbesondere 5 bis 50 und speziell 8 bis 30 nm auf.

Der Gehalt an Kieselsäure, berechnet als SiO₂, beträgt von 15 bis 60 Gew% , bevorzugt von 20 bis 55, besonders bevorzugt 25 bis 40 Gew%. Es sind auch alkalische Kieselsole mit einem geringeren Feststoffgehalt einsetzbar, jedoch muß der Mehrgehalt an Wasser dann in einem späteren Schritt destillativ abgetrennt werden.

Die alkalischen Kieselsole können mit den oben genannten Metallionen stabilisiert sein.

Das molare Verhältnis von Metallionen zu Siliziumatomen in (K) beträgt von 0 : 1 bis 0,1 : 1, bevorzugt von 0,002 bis 0,04 : 1.

Der pH-Wert dieser alkalischen Kieselsole beträgt in der Regel mindestens 8, bevorzugt 8 bis 12, besonders bevorzugt 8 bis 11 und ganz besonders bevorzugt 8 bis 10.

Die Herstellung der erfindungsgemäß einzusetzenden Kieselsole (K) aus diesen alkalischen Kieselsolen erfolgt durch Einstellen des gewünschten pH-Wertes in diesen Kieselsolen, beispielsweise Zugabe von Mineralsäuren oder Versetzen der alkalischen Kieselsole mit einem Ionentauscher.

Das Ansäuern kann mit beliebigen Säuren erfolgen, bevorzugt mit Salzsäure, Salpetersäure, Phosphorsäure, Schwefelsäure, Essigsäure, Ameisensäure, Methylsulfonsäure, para-Toluolsulfonsäure oder auch durch Versetzen mit einem sauren Ionentauscher, bevorzugt durch Ansäuern mit Salzsäure, Salpetersäure, Phosphorsäure, Schwefelsäure, saurem Ionentauscher oder Essigsäure, besonders bevorzugt mit Salzsäure, Salpetersäure, saurem Ionentauscher oder Schwefelsäure und ganz besonders bevorzugt durch Ansäuern mit saurem Ionentauscher oder Schwefelsäure.

Es stellt eine bevorzugte Ausführungsform dar, die Kieselsole (K) durch Versetzen von alkalischen Kieselsolen mit einem Ionentauscher herzustellen. Dies hat zur Folge, daß in den Kieselsolen (K) der Elektrolytgehalt niedrig ist, beispielsweise weniger als 0,2 Gew% beträgt und bevorzugt weniger als 0,1 Gew%.

Unter Elektrolyten werden hier andere anorganische ionische Bestandteile als Silikate, Hydroxide und Protonen verstanden. Diese vorwiegend aus der Stabilisierung der alkalischen Kieselsole stammenden Elektrolyte werden zur Stabilisierung der Partikel nach deren Herstellung zu der Suspension zugegeben, soweit sie nicht bereits im Ausgangsmaterial vorhanden sind.

Denkbar ist auch die Herstellung der Kieselsole (K) aus Wasserglas durch Ansäuern, beispielsweise mit einem Ionentauscher oder durch Versetzen mit Mineralsäure. Als Wasserglas wird dafür bevorzugt Kalium- und/oder Natriumsilikat eingesetzt, das besonders bevorzugt ein Verhältnis von 1 - 10 mol SiO₂ zu 1 mol Alkalioxid, ganz besonders bevorzugt 1,5 - 6 und insbesondere 2 - 4 mol SiO₂ zu 1 mol Alkalioxid aufweist.

In diesem Fall läßt man das Reaktionsgemisch reagieren, bis sich ein Kieselsol (K) der gewünschten Größe gebildet hat, und fährt dann mit dem erfindungsgemäßen Verfahren fort.

Die niedermolekularen Kieselsäuren (Ortho- und Oligokieselsäure) sind normalerweise nur in hochverdünnten wäßrigen Lösungen mit einem Gehalt von wenigen Gew% stabil und werden dafür in der Regel vor Weiterverwendung aufkonzentriert.

Weiterhin kann die Herstellung der Kieselsole (K) durch Kondensation von Estern niedermolekularer Kieselsäuren erfolgen. Dabei handelt es sich meist um C₁- bis C₄-Alkyl-, besonders Ethylester von Oligo- und insbesondere Orthokieselsäure, die im Sauren oder Basischen Kieselsole (K) bilden.

Zur Funktionalisierung der Oberfläche der SiO₂-Nanopartikel wird in einer bevorzugten Ausführungsform die erhaltene angesäuerte Lösung mit der 0 bis 10-fachen, bevorzugt 0,2 bis 5fachen, besonders bevorzugt 0,4 bis 3fachen und ganz besonders bevorzugt 0,5 bis 2fachen Menge an Wasser (bezogen auf die Menge des eingesetzten Kieselsols) versetzt und der 0,1 bis 20-fachen, bevorzugt 0,3 bis 10-fachen, besonders bevorzugt 0,5 bis 5fachen und ganz besonders bevorzugt 1 bis 2fachen Menge (bezogen auf die Menge des eingesetzten Kieselsols) an mindestens einem organischen Lösungsmittel (L) versetzt. Eine bevorzugte Ausführungsform stellt es dar, kein zusätzliches Wasser zuzugeben.

Das Lösungsmittel (L) kann vor oder während der Umsetzung mit dem Silan (S) dem Reaktionsgemisch zugegeben werden, bevorzugt vor oder während und besonders bevorzugt vor der Umsetzung mit dem Silan.

Das organische Lösungsmittel (L) wird nach folgenden Kriterien ausgewählt: Es sollte unter den Vermischungsbedingungen sowohl eine ausreichende Mischbarkeit mit Wasser als auch eine Mischbarkeit mit der organischen Beschichtungsmasse aufweisen.

Die Mischbarkeit mit Wasser unter den Reaktionsbedingungen sollte mindestens 20 Gew% (bezogen auf das fertige Wasser-Lösungsmittel Gemisch), bevorzugt mindestens 50 Gew% und besonders bevorzugt mindestens 80 Gew% betragen. Bei zu geringer Mischbarkeit besteht die Gefahr, daß sich aus dem modifizierten Kieselsol ein Gel bildet oder größere Nanopartikelaggregate ausflocken.

Die Beschichtungsmasse sollte vollständig in dem Lösungsmittel (L) bzw. dem Wasser-Lösungsmittel-Gemisch löslich sein.

Weiterhin sollte das Lösungsmittel (L) einen Siedepunkt von bevorzugt weniger als 80 °C in einem Druckbereich von Normaldruck bis 50 hPa aufweisen, so daß es einfach destillativ abtrennbar ist.

In einer bevorzugten Ausführungsform bildet das Lösungsmittel (L) mit Wasser unter den Bedingungen der Destillation ein Azeotrop oder Heteroazeotrop, so daß das Destillat nach der Destillation eine wäßrige und eine organische Phase bildet.

Beispiele für geeignete Lösungsmittel (L) sind Ethanol, 1-Propanol, 2-Propanol, 1-Butanol, 2-Butanol, 2-Methyl-2-propanol , 1-Chlor-2-Propanol, Cyclopentanol, Cyclohexanol, 1,4-Dioxan, Tetrahydrofuran, 1-Methoxy-2-propanol, 1-Ethoxy-2-propanol, 2-Ethoxyethanol, 2-Methyl-2-propanol,⁻ 2-Methoxyethanol, Dimethylformamid, Acetonitril und Aceton.

Es kann eine bevorzugte Ausführungsform darstellen, Wasser und Lösungsmittel (L) gleichzeitig zu der Lösung des Silikats zuzugeben, wobei es auch sinnvoll sein kann, Wasser und Lösungsmittel (L) miteinander vorgemischt zuzugeben.

Die Zugabe von Wasser und Lösungsmittel (L), bzw. deren Gemisch, kann in einem Guß, portionsweise oder kontinuierlich erfolgen.

Durch diese Maßnahme kann abhängig von der Vorbehandlung der Sole eine Agglomeration der Silikatpartikel vermindert oder bevorzugt sogar verhindert werden.

Zur Modifizierung wird dem Reaktionsgemisch noch mindestens eine Verbindung (S) zugefügt, die mindestens eine, bevorzugt genau eine mindestens einfach, beispielsweise ein- bis dreifach, bevorzugt genau dreifach alkoxylierte Silylgruppe und mindestens eine, bevorzugt genau eine Gruppe R² aufweist, die die Kompatibilität mit den anderen Komponenten der Beschichtungsmasse verbessert.

Bevorzugt handelt es sich bei den Verbindungen (S) um solche der Formel

(R¹-O-)ₙ-Si-R²(₄₋ₙ)

worin
R¹ für C₁ bis C₂₀-Alkyl, bevorzugt C₁bis C₄-Alkyl,
n für eine ganze Zahl von 1 bis 3, bevorzugt 3
steht.

R² steht darin für einen organischen, 1 bis 20 Kohlenstoffartome umfassenden Rest, der die Kompatibilität mit den anderen Komponenten der Beschichtungsmasse erhöht. Bevorzugt handelt es sich dabei um solche Gruppen, die reaktiv gegenüber den funktionellen Gruppen mindestens einer der Komponenten sind, oder um hydrophobe Gruppen.

Bevorzugte reaktive Gruppen sind Mercaptogruppen oder Epoxygruppen.

In diesen Fällen sind bevorzugte Verbindungen (S) 2-(3,4-Epoxycyclohexyl)ethyltriethoxysilan, 2-(3,4-Epoxycyclohexyl)ethyltrimethoxysilan, 3-Mercaptopropyltrimethoxysilan, 3-Mercaptopropyltriethoxysilan, 3-Mercaptopropytmethyldimethoxysilan, 3-Mercaptopropylmethyldiethoxysilan, 3-Glycidoxypropyltriethoxysilan oder 3-Glycidoxypropyltrimethoxysilan.

Besonders bevorzugt handelt es sich bei den Gruppen R² jedoch um hydrophobe Gruppen. Ganz besonders bevorzugt steht R² für C₁ bis C₂₀-Alkyl, C₆ bis C₁₂-Aryl oder C₅ bis C₁₂-Cycloalkyl und

Beispiele für C₁ bis C₂₀-Alkyl sind Methyl, Ethyl, iso-Propyl, n-Propyl, n-Butyl, iso-Butyl, sek-Butyl, tert-Butyl, n-Hexyl, n-Heptyl, n-Octyl, 2-Ethylhexyl, n-Decyl, n-Dodecyl, n-Tetradecyl, n-Hexadecyl, n-Octadecyl und n-Eicosyl.

Beispiele für C₁ bis C₄-Alkyl sind Methyl, Ethyl, iso-Propyl, n-Propyl, n-Butyl, iso-Butyl, sek-Butyl und tert-Butyl.

Bevorzugte Reste R¹ sind Methyl, Ethyl, n-Butyl und tert-Butyl, besonders bevorzugt Methyl und Ethyl.

Beispiele für C₅-C₁₂-Cycloalkylgruppen sind Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl; besonders bevorzugt ist Cyclohexyl.

C₆-C₁₂-Arylgruppen sind beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Bevorzugt handelt es sich bei dem Rest R² um C₁ bis C₂₀-Alkyl oder C₆-C₁₂-Aryl, besonders bevorzugt um C₁ bis C₂₀-Alkyl und ganz besonders bevorzugt um C₁ bis C₄-Alkyl.

Bevorzugte Reste R² sind Methyl, Ethyl, iso-Propyl, n-Propyl, n-Butyl, iso-Butyl, sek-Butyl, tert-Butyl und Phenyl, besonders bevorzugt sind Methyl, Ethyl, n-Butyl, iso-Butyl, tert-Butyl und Phenyl, ganz besonders bevorzugt sind iso-Butyl und Phenyl.

Bevorzugte Verbindungen (S) sind, Isooctyl trimethoxysilan, Isooctyl triethoxysilan, n-Butyltrimethoxysilan, n-Butyltriethoxysilan, iso-Butyltrimethoxysilan, iso-Butyltriethoxysilan, Phenyltrimethoxysilan und Phenyltriethoxysilan.

Es kann entscheidend sein, daß die Umsetzung des Kieselsols (K) mit mindestens einer Verbindung (S) in einem pH-Bereich erfolgt, der dem isoelektrischen Punkt des eingesetzten Kieselsols ± eine pH-Einheit entspricht. Zumeist handelt es sich dabei um einen pH-Wert von 2 bis 4.

Das Ansäuern kann mit beliebigen Säuren erfolgen, bevorzugt mit Salzsäure, Salpetersäure, Phosphorsäure, Schwefelsäure, Essigsäure, Ameisensäure, Methylsulfonsäure, para-Toluolsulfonsäure oder auch durch Überleiten über saure Ionentauscher, bevorzugt durch Ansäuern mit Salzsäure, Salpetersäure, Phosphorsäure, Schwefelsäure, Essigsäure oder Ionentauschern, besonders bevorzugt mit Salzsäure, Salpetersäure, Schwefelsäure oder Ionentauschern und ganz besonders bevorzugt durch Ansäuern mit Schwefelsäure oder Ionentauschern.

Durch die Umsetzung mit der Verbindung (S) wird die Oberfläche des eingesetzten Kieselsols (K) so modifiziert, daß die Verträglichkeit zwischen dem ursprünglich polaren Kieselsol und der zumeist unpolaren Beschichtungsmasse verbesert wird. Zugleich bringt eine vollständige Modifizierung der Oberfläche, wie beschrieben in WO 2006/044376 keine weiteren Vorteile.

Daher ist es in der Regel ausreichend, wenn (S) in einer Menge von 0,1 bis 20 µmol pro m² Oberfläche von (K) eingesetzt wird, bevorzugt in 0,25 bis 15, besonders bevorzugt 0,5 bis 10 und ganz besonders bevorzugt 1 bis 8 µmol pro m² Oberfläche von (K).

Dies entspricht in der Regel einer Menge von 0,01 bis 5 mmol (S) pro Gramm (K), bevorzugt 0,05 bis 4 mmol (S) pro Gramm (K) und besonders bevorzugt 0,1 bis 3 mmol (S) pro Gramm (K).

Die Umsetzung erfolgt bevorzugt in einer Weise, so daß nicht mehr als 20 mol% des eingesetzten Silans (S) unumgesetzt im Reaktionsgemisch verbleiben, bevorzugt nicht mehr als 15mol%, besonders bevorzugt nicht mehr als 10 mol% und ganz besonders bevorzugt nicht mehr als 5 mol%.

Dazu erfolgt die Umsetzung mit (S) unter Rühren bei einer Temperatur von 10 bis 60 °C, bevorzugt von 20 bis 50, besonders bevorzugt von 20 bis 40 °C.

Unter diesen Reaktionsbedingungen läßt man 30 Minuten bis 48 Stunden, bevorzugt 45 Minuten bis 36 Stunden, besonders bevorzugt 1 bis 24 Stunden reagieren.

Die Verbindung (S) wird in Mengen von 0,1 bis 40 Gew% zugesetzt bevorzugt 0,5 bis 30 Gew% und besonders bevorzugt 1 bis 20 Gew% bezogen auf den SiO₂-Gehalt.

Um die optimale Menge an Verbindung (S) pro Oberfläche von (K) zu bestimmen kann man beispielsweise wie folgt vorgehen:
Zunächst setzt man in einer systematischen Reihe Proben von (K) mit derartigen Mengen von (S) um, daß beispielsweise 20, 40, 60, 80 und 100 % der Hydroxygruppen an der Oberfläche von (K) mit (S) modifiziert werden. Selbstverständlich sind auch andere Mengen und größere oder geringere Abstände zwischen den Mengen in der Modifizierung von (K) möglich.

Von diesen Proben wird die Viskosität bestimmt und gegen die Menge von (S) aufgetragen. Üblicherweise wird man einen Bereich finden, in dem sich die Viskosität nur geringfügig in Abhängigkeit von der Menge an (S) ändert und einen Bereich, in dem die Viskosität sich stark in Abhängigkeit von der Menge an (S) ändert. Idealerweise bilden sich zwei Äste, die entsprechend als Geraden verlängert einen Schnittpunkt bilden, der, gegebenenfalls in einem Bereich von ± 10%, bevorzugt im Bereich von ± 5%, die optimale Menge an (S) pro Oberfläche von (K) mit Hinblick auf die Viskosität angibt.

Nach Zugabe von Wasser und Lösungsmittel (L) und der anschließenden Umsetzung mit dem Silan liegt das Kieselsol (K) in der Regel als 3 bis 30 Gew%ige kolloidale Lösung vor, wobei das Verhältnis von Wasser zu Lösungsmittel (L) in der Regel 10:90 bis 90:10 (v/v), bevorzugt 25:75 bis 75:25 und besonders bevorzugt 40:60 bis 60:40 beträgt.

Es folgt eine Abdestillation von Wasser und dem organischen Lösungsmittel (L) unter normalem oder vermindertem Druck, bevorzugt bei 10 hPa bis normalem Druck, besonders bevorzugt bei 20 hPa bis normalem Druck, ganz besonders bevorzugt bei 50 hPa bis normalem Druck und insbesondere bei 100 hPa bis normalem Druck.

Die Temperatur, bei der die Destillation erfolgt richtet sich nach der Siedetemperatur von Wasser und/oder organischem Lösungsmittel (L) bei dem jeweiligen Druck.

Bevorzugt werden die Destillationsbedingungen so gewählt, daß Wasser und das organische Lösungsmittel unter den Bedingungen ein Azeotrop bilden.

Bevorzugt beträgt die Temperatur nicht mehr als 80 °C, bevorzugt nicht mehr als 70 °C.

Die Destillation kann diskontinuierlich, semikontinuierlich oder kontinuierlich erfolgen.

Beispielsweise kann sie diskontinuierlich aus einem Rührkessel erfolgen, dem gegebenenfalls eine kurze Rektifikationskolonne aufgesetzt sein kann.

Die Wärmezufuhr bei dem Rührkessel erfolgt über innen- und/oder außenliegende Wärmetauscher herkömmlicher Bauart und/oder Doppelwandheizung, vorzugsweise außenliegende Umlaufverdampfer mit Natur- oder Zwangsumlauf. Die Durchmischung des Reaktionsgemisches erfolgt auf bekannte Weise, z. B. durch Rühren, Umpumpen oder Naturumlauf.

Kontinuierlich erfolgt die Destillation bevorzugt durch Überleiten der Destillationsvorlage über einen Fallfilmverdampfer oder einen Wärmetauscher.

Als Destillationsapparat dafür geeignet sind sämtliche dem Fachmann bekannte Destillationsapparate, z.B. Umlaufverdampfer, Dünnfilmverdampfer, Fallfilmverdampfer, Wischblattverdampfer, gegebenenfalls jeweils mit aufgesetzten Rektifikationskolonnen sowie Strippkolonnen. Als Wärmetauscher geeignet sind beispielsweise Robert-Verdampfer oder Röhren- oder Plattenwärmetauscher.

Der Restgehalt an Lösungsmittel (L) in der Verbindung (D) sollte weniger als 15 Gew% betragen, bevorzugt weniger als 10, besonders bevorzugt weniger als 5, ganz besonders bevorzugt weniger als 3, insbesondere weniger als 2 und speziell weniger als 1 Gew% betragen.

Bevorzugt beträgt der Wassergehalt der Verbindungen (D) unter 5 Gew%, besonders bevorzugt unter 3 Gew%, ganz besonders bevorzugt unter 2 Gew%, insbesondere unter 1 Gew%.

Die erfindungsgemäßen zweikomponentigen Polyurethanbeschichtungsmassen weisen in der Regel eine Stöchiometrie von Isocyanatgruppen in (A) zu gegenüber Isocyanat reaktiven Gruppen in (B) und (C) von 0,1:1 bis 10:1, bevorzugt 0,2:1 bis 5:1, besonders bevorzugt 0,3:1 bis 3:1, ganz besonders bevorzugt 0,5:1 bis 2:1, insbesondere 0,8:1 bis 1,2:1 und speziell 0,9:1 bis 1,1:1 auf.

Das Gewichtsverhältnis der Komponenten (B) : (C) beträgt in der Regel von 100:1 bis 1:50, bevorzugt von 80:1 bis 1:30, besonders bevorzugt von 50:1 bis 1:20, ganz besonders bevorzugt von 25:1 bis 1:10, insbesondere von 10:1 bis 1:5 und speziell von 3:1 bis 1:2.

Der Anteil an Silikatteilchen (D), berechnet als SiO₂, in der Beschichtungsmasse kann mindestens 0,5 und bis zu 50 Gew%, bezogen auf die Summe der Komponenten (A), (B) und (C) betragen, bevorzugt 1 bis 40, besonders bevorzugt 1,5 bis 30, ganz besonders bevorzugt 2 bis 25 und insbesondere 2 bis 15 Gew%.

Zur Herstellung der erfindungsgemäßen Beschichtungsmassen werden Polyisocyanatzusammensetzung (A) und Bindemittel (B) und (C) in dem gewünschten Molverhältnis von Isocyanatgruppen in (A) zu gegenüber Isocyanat reaktiven Gruppen in (B) und (C) miteinander vermischt, wobei gegebenenfalls noch weitere lacktypische Bestandteile eingemischt werden können. Anschließend wird auf das Substrat aufgetragen.

In einer bevorzugten Ausführungsform wird die Komponente (D) in einer der Komponenten (A), (B) oder (C) vorgemischt und diese vorgemischten Komponenten erst dann mit den weiteren Komponenten vermischt. Besonders bevorzugt wird die Komponente (D) in einer der Komponenten (B) oder (C) vorgemischt, ganz besonders bevorzugt in der Komponente (B).

Als weitere lacktypische Additive (G) in den Beschichtungsmassen können beispielsweise eingesetzt werden: UV-Stabilisatoren wie UV-Absorber und geeignete Radikalfängern (insbesondere HALS-Verbindungen, Hindered Amin Light Stabilizer), Aktivatoren (Beschleuniger), Trockenmittel, antistatische Agentien, Flammschutzmittel, Verdicker, thixotrope Agentien, oberflächenaktive Agentien, Viskositätsmodifikatoren, Plastifizierer oder Chelatbildner. Bevorzugt sind UV-Stabilisatoren.

Geeignete UV-Absorber umfassen Oxanilide, Triazine und Benzotriazol (letztere erhältlich z.B. als Tinuvin®-Marken der Ciba Spezialitätenchemie) und Benzophenone (z.B. Chimassorb® 81 der Ciba Spezialitätenchemie). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1,-dimethylethyl)-4-hydroxyphenyl]-1-oxopropyl]-ω-hydroxypoly(oxo-1,2-ethanediyl) (z.B. Tinuvin® 1130), jeweils Produkte z.B. der Ciba Spezialitätenchemie. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen bezeichnet; Hindered Amine (Light) Stabilizer) wie 2,2,6,6-Tetramethylpiperidin, 2,6-Di-tert.-butylpiperidin oder deren Derivaten, z. B. Bis-(2,2,6,6-tetra-methyl-4-pi-peridyl)sebacinat, eingesetzt werden. Diese sind z.B. erhältlich als Tinuvin®- und Chimassorb®-Marken der Ciba Spezialitätenchemie. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]methyl]butylmalonat (z.B. Tinuvin® 144 der Ciba Spezialitätenchemie); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der Ciba Spezialitätenchemie); oder die N-(O-Alkyliert) sind, wie z.B. Dekandisäure,bis(2,2,6,6-tetramethyl-1-(octyloxy)-4-piperidinyl)ester, Reaktionsprodukte mit 1,1-Dimethylethylhydroperoxyd und Oktan (z.B. Tinuvin® 123 der Ciba Spezialitätenchemie).

UV-Stabilisatoren werden üblicherweise in Mengen von 0,1 bis 5,0 Gew.-%, bezogen auf die in der Zubereitung enthaltenen festen Komponenten, eingesetzt.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Weiterhin können noch als Komponente (H) Füllstoffe, Farbstoffe und/oder Pigmente enthalten sein.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepaßt werden, beispielsweise wie in Schritt a) beschrieben. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Bevorzugte Füllstoffe umfassen andere Silikate als Verbindungen (D), z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Weiterhin kann die Beschichtungsmasse mit mindestens einem Katalysator versetzt werden, der die Umsetzung von Isocyanatgruppen mit gegenüber Isocyanat reaktiven Gruppen zu beschleunigen vermag.

Verbindungen, die die Umsetzung von Isocyanatgruppen mit gegenüber Isocyanat reaktiven Gruppen zu beschleunigen vermögen, sind solche Verbindungen, die durch ihre Anwesenheit in einem Eduktgemisch zu einem höheren Anteil an urethangruppenhaltigen Reaktionsprodukten führen als das gleiche Eduktgemisch in deren Abwesenheit unter denselben Reaktionsbedingungen.

Diese Verbindungen sind literaturbekannt, beispielsweise aus G. Oertel (Hrsg.), Polyurethane, 3. Auflage 1993, Carl Hanser Verlag, München - Wien, Seiten 104 bis 110, Kapitel 3.4.1. "Katalysatoren", bevorzugt sind organische Amine, insbesondere tertiäre aliphatische, cycloaliphatische oder aromatische Amine, Brønsted-Säuren und/oder Lewis-saure Organometallverbindungen, besonders bevorzugt sind Lewis-saure Organometallverbindungen.

Als Lewis-saure organische Metallverbindungen kommen z.B. Zinnverbindungen in Frage, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z.B. Dimethylzinn-diacetat, Dibutylzinn-diacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Zudem können Zink-(II)-Salze eingesetzt werden, wie beispielsweise Zink-(II)-dioctoat.

Wenn nicht anders angegeben kann es sich bei den Carbonsäuren, z.B. bei Octoat, um verzweigte und/oder unverzweigte Isomere handeln, bevorzugt um unverzweigte.

Auch Metallkomplexe wie Acetylacetonate des Eisens, Titans, Aluminiums, Zirkons, Mangans, Nickels, Zinks und Cobalts sind möglich.

Weitere Metallkatalysatoren werden von Blank et al. in Progress in Organic Coatings, 1999, Vol. 35, Seiten 19-29 beschrieben.

Als Zinn- und Zink-freie Alternativen werden u.a. Zirkonium, Wismut und AluminiumVerbindungen eingesetzt. Dies sind z.B. Zirkoniumtetraacetylacetonat (z.B. K-KAT® 4205 der Firma King Industries); Zirkoniumdionate (z.B. K-KAT® XC-9213; XC-A 209 und XC-6212 der Firma King Industries); Wismut-Verbindungen, insbesondere Tricarboxylate (z.B. K-KAT® 348, XC-B221; XC-C227, XC 8203 der Firma King Industries); Aluminiumdionat (z.B. K-KAT® 5218 der Firma King Industries). Zinn- und Zink-freie Katalysatoren werden ansonsten z.B. auch unter dem Handelsnamen Borchi® Kat der Firma Borchers, TK der Firma Goldschmidt oder BICAT® der Firma Shepherd, Lausanne angeboten.

Diese Katalysatoren sind für lösungsmittel-, wasser-basierte und/oder blockierte Systeme geeignet.

Molybdän-, Wofram- und Vanadium-Katalysatoren, werden insbesondere für den Umsatz blockierter Polyisocyanate unter WO 2004/076519 und WO 2004/076520 beschrieben.

Auch Cäsiumsalze können als Katalysatoren eingesetzt werden. Als Cäsiumsalze kommen dabei solche Verbindungen in Betracht, in denen folgende Anionen eingesetzt werden: F-, Cl⁻, CIO-, ClO₃⁻, ClO₄⁻, Br⁻, J-, JO₃⁻, CN-, OCN-, NO₂⁻_{,} NO₃⁻, HCO₃⁻, CO₃²⁻, S²⁻, SH-, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²- mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Dioctylzinn-dilaurat, Zink-(II)-dioctoat, Zirkon-Acetylacetonat und Zirkon-2,2,6,6-tetramethyl-3,5-heptandionat.

Besonders bevorzugt ist jedoch Dibutylzinndilaurat.

Anschließend an das Auftragen der erfindungsgemäßen Beschichtungsmasse wird bei Umgebungstemperatur bis 140 °C, bevorzugt 20 bis 80 °C, besonders bevorzugt bis 60 °C das Lackgemisch ausgehärtet.

Dies erfordert je nach Temperatur in der Regel nicht mehr 12 Stunden, bevorzugt bis zu 8 Stunden, besonders bevorzugt bis zu 6, ganz besonders bevorzugt bis zu 4 und insbesondere bis zu 3 Stunden.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Beschichtungsmasse, gegebenenfalls unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Weiterhin sind auch Substrate, beschichtet mit einer erfindungsgemäßen Mehrschichtlackierung Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich, Dekolackierungen, Brücken, Gebäuden, Strommasten, Tanks, Containem, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern und insbesondere in Automobillacken als OEM und refinish-Anwendung.

Bevorzugt werden derartige Beschichtungsmassen bei Temperaturen zwischen Umgebungstemperatur bis 80 °C, bevorzugt bis 60 °C, besonders bevorzugt bis 40 °C eingesetzt. Bevorzugt handelt es sich dabei um solche Gegenstände, die nicht bei hohen Temperaturen gehärtet werden können, wie große Maschinen, Flugzeuge, Großraumfahrzeuge und refinish-Anwendungen.

Insbesondere werden die erfindungsgemäßen Beschichtungsmassen als Klar-, Basis- und Decklacke(n), Primern und Füllern eingesetzt.

Hydroxy- und Säurezahlen in dieser Schrift werden, wenn nicht anders angegeben, gemäß DIN 53240, Teil 2 bestimmt.

Die Glasübergangstemperatur T_{g}, wird in dieser Schrift bevorzugt bestimmt gemäß ASTM-Vorschrift D3418-03 über Differential Scanning Calorimetry (DSC), bevorzugt mit einer Aufheizrate von 10 °C/min.

### Beispiele

### Polymer 1

In einem 500 mL Vierhalsglaskolben mit Wasserauskreiser wurden Sebacinsäure (380,1 g), Trimethylolpropan (120,1 g) und Dibutylzinnlaurat (0,051 g) in Stickstoffatmosphäre vorgelegt und unter Rühren auf 180 °C erwärmt. Nach 1 h wurde die Reaktionsmischung auf 120 °C abgekühlt und unter Rühren mit Isononansäure (67,9 g) versetzt. Nach weiteren 130 min bei 120 °C wurde die Reaktion abgekühlt und das Produkt in Butylacetat gelöst.
Säurezahl (SZ) 96 mg KOH/g
Hydroxyzahl (OHZ) 213 mg KOH/g
Zahlenmittleres Molgewicht Mn 504 g/mol
Gewichtsmittleres Molgewicht Mw 27675 g/ mol
Feststoffgehalt 61 %

### Polymer 2

In einem 6L Vierhalskolben mit Rückflusskühler und Wasserauskreiser wurden Di-Trimethylolpropan (2267,3 g), Sebacinsäure (1831,8 g) und Dibutylzinnlaurat (0,858 g) in Stickstoffatmosphäre vorgelegt und unter Rühren auf 150 - 170 °C erhitzt. Nach einer Reaktionszeit von 2 h wurde abgekühlt und das Produkt in 1 L Butylacetat gelöst.
SZ 85
OHZ 341
Mn 1409 g/mol
Mw 3352 g/mol
Tg -37 °C

### Polymer 3

In einem 1 L Vierhalskolben mit Wasserauskreiser wurden in Stickstoffatmosphäre Di-Trimethylolpropan (276,5 g), Sebacinsäure (202,2 g) und Dibutylzinnlaurat (0,1 g) vorgelegt und unter Rühren auf 160 - 180 °C erhitzt. Nach einer Reaktionszeit von 1,5 h wurde abgekühlt und das Produkt in 125 mL Butylacetat gelöst.
SZ 66 mg KOH/g
OHZ 294 mg KOH/g
Mn 1955 g/mol
Mw 6633 g/mol
Tg -21 °C

### Polymer 4

In einem 500 mL Vierhalskolben mit Wasserauskreiser wurden in Stickstoffatmosphäre Cyclohexan-1,4-dicarbonsäure (1139 g), Trimethylolpropan (1775 g) und Dibutylzinnlaurat (1,09 g) vorgelegt und unter Rühren auf 160 - 180 °C erhitzt. Nach 4h wurde Adipinsäuredimethylester (576,2 g) über einen Zeitraum von 2h zugegeben und im Anschluss für weitere 2h unter Abscheidung von 283 g Wasser-Ethanol-Gemisch gekocht. Nach Abkühlen wurde ein klarer, gelber Polyester erhalten.
SZ 15 mg KOH/g
OHZ 427 mg KOH/g
Mn 290 g/mol
Mw 1150 g/mol
Tg -38 °C

### Polymer 5

Hydrophobe Modifizierung eines handelsüblichen hyperverzweigten Polyesters, um diesen leichter mischbar mit einer Beschichtungsmasse auszugestalten In einem In einem Vierhalskolben mit Rückflusskühler und Wasserauskreiser wurden Boltorn® H40 (hyperverzweigter Polyester der Firma Perstorp, aufgebaut aus 2,2-Dimethylolpropionsäure, OH-Zahl: 470-500 mg KOH/g, Mₙ 7300 g/mol, M_{w} 5100 g/mol, Tg ca. 40 °C, ca. 64 terminale Hydroxyfunktionen) (298,0 g), Isononansäure (201,6 g) und Dibutylzinnlaurat (0,25 g) in Stickstoffatmosphäre vorgelegt und unter Rühren auf 190 °C erhitzt. Nach einer Reaktionszeit von 2 h wurde bei einer Säurezahl von 15 mg KOH/g abgekühlt und das Produkt in Butylacetat (125 ml) gelöst.

### Synthesen der Nanopartikel

### Silikat 1

Zu einer Dispersion von 160 g Levasil 200 (30 wt-% SiO2, ca. pH 2,5) und 160 ml Isopropanol wurden unter Rühren 9,36 g Isobutyltriethoxysilan zugegeben und 16 Stunden weitergerührt. Unter reduziertem Druck und kontinuierlicher Zugabe von 2 L Isopropanol wurde die Dispersion bei 50°C auf ca. 300g eingeengt. Nach Zugabe von 500 ml Butylacetat wurde die Dispersion auf 259g eingeengt. Man erhält eine transparente Dispersion von funktionalisierten Silikapartikel (DLS: 44 nm) mit einem Restwassergehalt von 0, 1 %.

Anwendungstechnische Vergleichsversuche:
Testverfahren:
   Die Lacke wurden für 30 Minuten bei 80°C bzw. 130°C eingebrannt.

Kratzfestigkeit: Zur Prüfung der Kratzfestigkeit rieb man mit einem 1 x1 cm großen Scotch-Brite-Vlies (Scotchbrite®, 7448 Typ S ultrafine) mit einem Auflagegewicht von 500 g über die Lackoberfläche. Der Glanz des Lackes wurde bestimmt mittels eines Mikro TRI-Gloss Messgerätes. Die Abnahme des Glanzes nach 10 und 50 Doppelhüben (dH) kann als Maß für die Kratzbeständigkeit der Lacke gelten. Nach 50 Doppelhüben wurden die Lacke für 1h bei 60°C bzw. 30 Minuten bei 60 °C und 12 h bei Raumtemperatur (r.t.) gelagert und anschließend als Maß für die Reflow-Fähigkeit erneut der Glanz ermittelt.

Die Pendelhärte wurde nach König bestimmt (DIN EN ISO 1522).
Die Erichsentiefung wurde nach DIN EN ISO 1520 ermittelt.
Zur Bestimmung der Staubtrockenzeit wurde die Lackoberfläche mit einem Wattebausch berührt, der Lack gilt dann als staubtrocken, wenn keine Watte mehr an der Oberfläche haften bleibt.

Zur Prüfung des Trocknungsverhaltens der Lacke wird ein mit ca. 60-80g Sand befüllter, mit Rädern versehener Trichter mit konstanter Vorschubgeschwindigkeit über eine mit Lack beschichtete Glasplatte gezogen. Die Vorschubgeschwindigkeit beträgt 1 cm/h. Nach Ende der Prüfungen wird die Platte vom losen Sand befreit. Als Sandtrocknung bezeichnet man die Zeitspanne, zwischen Beginn der Prüfung bis zum letzten, dauerhaften Anhaften der Sandkörner. Die Durchtrocknung wird ermittelt als die Zeit, in der die Räder des Trichters noch eine Spur im Lack hinterlassen.

| | Vgl 1 | Bsp 1 |
|---|---|---|
| Basonat® HI 100 [g] | 30,2 | 30,2 |
| Joncryl® 922 [g] | 35,0 | 35,0 |
| Polymer 1 [g] | 35,0 | 35,0 |
| Nanobyk® 3650 [g] | | 7,06 |
| Butylacetat [g] | 74,0 | 68,0 |
| Staubtrocken [min] | 270 | 240 |
| Erichsentiefung [mm], 30', 80°C | > 9 | > 9 |
| Erichsentiefung [mm], 30', 130°C | > 9 | > 9 |
| Glanz (60°), 30', 80°C | 97,7 | 96,1 |
| Glanz (60°), 10 dH, 30', 80°C | 27,4 | 51,8 |
| Glanz (60°), 50 dH, 30', 80°C | 24,2 | 47,0 |
| Glanz (60°), 1 h, 60°C, 30', 80°C | 60,7 | 89,8 |
| Glanz (60°), 30', 130°C | 97,2 | 95,8 |
| Glanz (60°), 10 dH, 30', 130°C | 25,3 | 44,0 |
| Glanz (60°), 50 dH, 30', 130°C | 22,3 | 32,7 |
| Glanz (60°), 1 h, 60°C, 30', 130°C | 62,7 | 86,8 |

Basonat® HI 100 der Fa. BASF SE, Ludwigshafen: isocyanuratgruppenhaltiges Polyisocyanat auf Basis von Hexamethylendiisocyanat mit einem NCO-Gehalt gemäß DIN EN ISO 11909 von 21,5 - 22,5%

Joncryl® 922: Polyacrylatol der Firma BASF mit OH-Zahl 140 mg KOH/g Nanobyk® 3650: oberflächenmodifizierte Silika-Partikel der Firma BYK mit Teilchengröße (D50) von 20 nm.

| | Vgl 2 | Bsp 2 | Bsp 3 | Bsp 4 |
|---|---|---|---|---|
| Basonat Hl 100 [g] | 7,71 | 10,04 | 10,32 | 11,56 |
| Joncryl 922 [g] | 9,75 | 7,50 | 8,25 | 6,00 |
| Polymer 5 [g] | 9,75 | | | |
| Polymer 2 [g] | | 7,50 | | |
| Polymer 3 [g] | | | 8,25 | |
| Polymer 3 [g] | | | | 6,00 |
| Nanobyk 3650 [g] | 1,53 | 1,57 | 1,73 | 1,39 |
| Butylacetat [g] | 10,95 | 14,25 | 16,50 | 11,25 |
| Staubtrocken [min] | 500 | 240 | 220 | 260 |
| Pendelhärte [König], 7h r.t. | Klebrig | 8 | 10 | 6 |
| Pendelhärte [König], 24h r.t. | 11 | 67 | 59 | 78 |
| Pendelhärte [König], 3d r.t. | 45 | 100 | 94 | 108 |
| Pendelhärte [König], 7d r.t. | 56 | 106 | 98 | 116 |
| Pendelhärte [König], 7d r.t., 15h, 60°C | 63 | 107 | 100 | 113 |
| Glanz (60°), 30', 60°C | 96,9 | 97,5 | 97,9 | 94,8 |
| Glanz (60°), 50 dH, 30', 60°C | 4,9 | 43,4 | 51,4 | 34,1 |
| Glanz (60°), 1 h, 60°C, 30', 60°C | 6,6 | 89,7 | 93,3 | 84,6 |
| Sandtrocknung [h] | 10 | 3 | 3 | 5 |
| Durchtrocknung [h] | 12 | 3 | 3 | 4 |

| | Vgl 3 | Bsp 5 | Bsp 6 |
|---|---|---|---|
| BasonatⓇ Hl 100 [g] | 10,32 | 10,32 | 10,32 |
| JoncrylⓇ 922 [g] | 8,25 | 8,25 | 8,25 |
| Polymer 3 [g] | 8,25 | 8,25 | 8,25 |
| NanobykⓇ 3650 [g] | | 1,73 | |
| Silikat 1 [g] | | | 2,69 |
| Butylacetat [g] | 16,50 | 16,50 | 15,55 |
| Staubtrocken [min] | 240 | 210 | 240 |
| Glanz (60°), 30', | 97,1 | 96,8 | 95,8 |
| 60°C | | | |
| Glanz (60°), 10 dH, 30', 60°C | 35,3 | 47,8 | 34,5 |
| Glanz (60°), 50 dH, 30', 60°C | 38,3 | 43,5 | 45,0 |
| Glanz (60°), 1 h, 60°C, 30', 60°C | 85,6 | 92,0 | 85,5 |

## Patentansprüche

1. Zweikomponentige Polyurethanbeschichtungsmassen, enthaltend als Aufbaukomponenten
(A) mindestens ein Polyisocyanat, erhältlich durch Umsetzung mindestens eines monomeren Isocyanats,
(B) mindestens ein hydroxygruppenhaltiges Poly(meth)acrylatpolyol,
(C) mindestens ein hyperverzweigtes Polyesterpolyol,
entweder erhältlich durch Polykondensation
- mindestens einer Dicarbonsäure A₂ oder deren Derivate,
- optional mindestens einer tri- oder höherfunktionellen Carbonsäure Aₓ mit x≥3 oder deren Derivate und
- mindestens einem tri- oder höherfunktionellen Alkohol By mit y≥3, sowie
- optional mindestens einem Diol B₂, bevorzugt in Abwesenheit von Diol B₂, oder erhältlich durch Polykondensation
- mindestens einer tri- oder höherfunktionellen Carbonsäure Aₓ mit x≥3 oder deren Derivate
- optional mindestens einer Dicarbonsäure A₂ oder deren Derivate, bevorzugt in Abwesenheit einer Dicarbonsäure A₂ oder deren Derivate, und
- mindestens einem Diol B₂, sowie
- optional mindestens einem tri- oder höherfunktionellen Alkohol By mit y≥3, und
(D) Silikatpartikel der Größe von 5 bis 150 nm, deren Oberfläche mit einer mindestens einfach alkoxylierten Silylverbindung (S) modifiziert sind.

2. Beschichtungsmasse gemäß Anspruch 1, **dadurch gekennzeichnet, daß** das Polyisocyanat (A) ausgewählt aus der Gruppe bestehend aus Isocyanuraten, Iminooxadiazindionen, Biureten, Urethanen und Allophanaten.

3. Beschichtungsmasse gemäß Anspruch 1 oder 2, **dadurch gekennzeichnet, daß** das monomere Isocyanat ausgewählt ist aus der Gruppe bestehend aus 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan.

4. Beschichtungsmasse gemäß einem der vorstehenden Ansprüche, **dadurch gekennzeichnet, daß** das Poly(meth)acrylatpolyol (B) ein Molekulargewicht Mₙ (Zahlenmittel) von 500 bis 50.000 aufweist.

5. Beschichtungsmasse gemäß einem der vorstehenden Ansprüche, **dadurch gekennzeichnet, daß** das Poly(meth)acrylatpolyol (B) eine Säurezahl gemäß DIN EN ISO 3682 bis 200 mg KOH/g aufweist.

6. Beschichtungsmasse gemäß einem der vorstehenden Ansprüche, **dadurch gekennzeichnet, daß** das Polyesterpolyol (C) eine Summe von Säurezahl und OH-Zahl gemäß DIN 53240, Teil 2 von bis zu 600 mg KOH/g aufweist.

7. Beschichtungsmasse gemäß einem der vorstehenden Ansprüche, **dadurch gekennzeichnet, daß** es sich bei der Silylverbindung (S) um solche der Formel
(R¹-O-)ₙ-Si-R²(₄₋ₙ)
handelt, worin
R¹ für C₁ bis C₂₀-Alkyl, bevorzugt C₁bis C₄-Alkyl,
n für eine ganze Zahl von 1 bis 3, bevorzugt 3
steht.

8. Beschichtungsmasse gemäß Anspruch 7, **dadurch gekennzeichnet, daß** die Gruppe R² die Kompatibilität mit den anderen Komponenten der Beschichtungsmasse verbessert.

9. Beschichtungsmasse gemäß Anspruch 7, **dadurch gekennzeichnet, daß** R² ausgewählt ist aus der Gruppe bestehend aus C₁ bis C₂₀-Alkyl, C₆ bis C₁₂-Aryl und C₅ bis C₁₂-Cycloalkyl.

10. Beschichtungsmasse gemäß einem der vorstehenden Ansprüche, **dadurch gekennzeichnet, daß** (S) ausgewählt ist aus der Gruppe bestehend aus Isooctyl trimethoxysilan, Isooctyl triethoxysilan, n-Butyltrimethoxysilan, n-Butyltriethoxysilan, iso-Butyltrimethoxysilan, iso-Butyltriethoxysilan, Phenyltrimethoxysilan und Phenyltriethoxysilan.

11. Verfahren zum Beschichten von Substraten, **dadurch gekennzeichnet, daß** man Polyisocyanatzusammensetzung (A) und Bindemittel (B) und (C), wie definiert in den vorstehenden Ansprüchen, in einem Molverhältnis von Isocyanatgruppen in (A) zu gegenüber Isocyanat reaktiven Gruppen in (B) und (C) von 0,1:1 bis 10:1 miteinander vermischt, wobei gegebenenfalls noch weitere lacktypische Bestandteile eingemischt werden können, und man anschließend auf das Substrat aufgeträgt.

12. Verwendung von Beschichtungsmassen gemäß einem der Ansprüche 1 bis 10 zum Beschichten von von Gebäudeteilen, Beschichtungen auf (Groß-)Fahrzeugen und Flugzeugen und industriellen Anwendungen, Nutzfahrzeuge im landwirtschaftlichen und Baubereich, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, Parkdecks oder in Automobillacken als OEM und refinish-Anwendung.

## Claims

1. A two-component polyurethane coating composition comprising as synthesis components
(A) at least one Polyisocyanate obtainable by reacting at least one monomeric isocyanate,
(B) at least one hydroxyl-containing poly(meth)acrylate polyol,
(C) at least once hyperbranched Polyester polyol, either obtainable by polycondensation of
- at least once dicarboxylic acid A₂ or derivatives thereof,
- optionally of at least once tri-functional or higher polyfunctional carboxylic acid Aₓ with x≥3 or derivatives thereof, and
- at least one tri-functional or higher polyfunctional alcohol By with y≥3, and also
- optionally at least one diol B₂, preferably in the absence of diol B₂,
or obtainable by polycondensation of
- at least one tri-functional or higher polyfunctional carboxylic acid Aₓ with x≥3 or derivatives thereof,
- optionally at least once dicarboxylic acid A₂ or derivatives thereof, preferably in the absence of a dicarboxylic acid A₂ or derivatives thereof, and
- at least one diol B₂, and also
- optionally at least one tri-functional or higher polyfunctional alcohol B_{y} with y≥3, and
(D) silicate particles with a size of 5 to 150 nm whose surface has been modified with an at least monoalkoxylated silyl compound (S).

2. The coating composition according to claim 1, wherein the polyisocyanate (A) is selected from the group consisting of isocyanurates, iminooxadiazinediones, biurets, urethanes, and allophanates.

3. The coating composition according to claim 1 or 2, wherein the monomeric Isocyanate is selected from the group consisting of 1,6-hexamethylene diisocyanate, 1,3-bis(isocyanatomethyl)cyclohexane, isophorone diisocyanate, and 4,4'- or 2,4'-di(isocyanatocyclohexyl)methane.

4. The coating composition according to any of the preceding claims, wherein the poly(meth)acrylate polyol (B) has a molecular weight Mₙ (number average) of 500 to 50 000.

5. The coating composition according to any of the preceding claims, wherein the poly(meth)acrylate polyol (B) has an acid number to DIN EN ISO 3682 of up to 200 mg KOH/g.

6. The coating composition according to any of the preceding claims, wherein the polyester polyol (C) has a sum of acid number and OH number to DIN 53240 Part 2 of up to 600 mg KOH/g.

7. The coating composition according to any of the preceding claims, wherein the silyl compound (S) is a compound of the formula
(R¹-O-)ₙ-Si-R²₍₄₋ₙ₎
in which
R¹ is C₁ to C₂₀ alkyl, preferably C₁ to C₄ alkyl, and
n is an integer from 1 to 3, preferably 3.

8. The coating composition according to claim 7, wherein the group R² improves the compatibility with the other components of the coating composition.

9. The coating composition according to claim 7, wherein R² is selected from the group consisting of C₁ to C₂₀ alkyl, C₆ to C₁₂ aryl, and C₅ to C₁₂ cycloalkyl.

10. The coating composition according to many of the preceding claims, wherein (S) is selected from the group consisting of isooctyltrimethoxysilane, isooctyltriethoxysilane, n-butyltrimethoxysilane, n-butyltriethoxysilane, isobutyltrimethoxysilane, isobutyltriethoxysilane, phenyltrimethoxysilane and phenyltriethoxysilane.

11. A method of coating substrates, which comprises mixing polyisocyanate composition (A) and blinders (B) and (C), as defined in the above claims, in a molar ratio of isocyanate groups in (A) to isocyanate-reactive groups in (B) and (C) of 0.1:1 to 10:1, it being possible if desired for further typical coatings constituents to be mixed in, and subsequently applying the resulting composition to the substrate.

12. The use of a coating composition according to any of claims 1 to 10 for coating parts of buildings, coatings on (large) vehicles and aircraft, and industrial applications, utility vehicles in agriculture and construction, decorative coatings, bridges, buildings, power masts, tanks, containers, pipelines, power stations, chemical plants, ships, cranes, posts, sheet piling, valves, pipes, fittings, flanges, couplings, halls, roofs, and structural steel, furniture, windows, doors, woodblock flooring, can coating and coil coating, for floor coverings, parking levels, or in automotive coating materials, as OEM and refinish.

## Revendications

1. Matières de revêtement polyuréthane bicomposantes, contenant comme composants structuraux
(A) au moins un polyisocyanate, pouvant être obtenu par mise en réaction d'au moins un isocyanate monomère,
(B) au moins un poly(méth)acrylatepolyol contentant des groupes hydroxy,
(C) au moins un Polyesterpolyol hyper-ramifié,
Soit pouvant être obtenu par polycondensation
- d'au moins un acide dicarboxylique A₂ ou ses dérivés,
- en option d'au moins un acide carboxylique trifonctionnel ou à plus haute fonctionnalité Aₓ où x ≥ 3 ou ses dérivés et
- d'au moins un alcool trifonctionnel ou à plus haute fonctionnalité By où y ≥ 3, ainsi
- qu'en option d'au moins un diol B₂, de préférence en absence de diol B₂,
soit pouvant être obtenu par polycondensation
- d'au moins un acide carboxylique trifonctionnel ou à plus haute fonctionnalité Aₓ où x ≥ 3 ou ses dérivés
- en option d'au moins un acide dicarboxylique A₂ ou ses dérivés, de préférence en absence d'un acide dicarboxylique A₂ ou de ses dérivés, et
- d'au moins un diol B₂, ainsi
- qu'en option d'au moins un alcool trifonctionnel ou à plus haute fonctionnalité B_{y} où y ≥ 3, et
(D) des particules de silicate ayant une taille de 5 à 150 nm, dont la surface est modifiée avec un composé silylé (S) au moins une fois alcoxylé.

2. Matière de revêtement selon la revendication 1, **caractérisée en ce que** le polyisocyanate (A) est choisi dans le groupe constitué par des isocyanurates, iminooxadiazinediones, biurets, uréthanes et allophanates.

3. Matière de revêtement selon la revendication 1 ou 2, **caractérisée en ce que** l'isocyanate monomère est choisi dans le groupe constitué par le 1,6-hexaméthylènediisocyanate, le 1,3-bis(isocyanato-méthyl)cyclohexane, l'isophorone-diisocyanate et le 4,4'- ou 2,4'-di(isocyanatocyclohexyl)méthane.

4. Matière de revêtement selon l'une quelconque des revendications précédentes, **caractérisée en ce que** le poly(méth)acrylatepolyol (B) présente une masse moléculaire Mₙ (moyenne en nombre) de 500 à 50 000.

5. Matière de revêtement selon l'une quelconque des revendications précédentes, **caractérisée en ce que** le poly(méth)acrylatepolyol (B) présente un indice d'acide selon DIN EN ISO 3682 de jusqu'à 200 mg de KOH/g.

6. Matière de revêtement selon l'une quelconque des revendications précédentes, **caractérisée en ce que** le Polyesterpolyol (C) présente une somme d'indice d'acide et d'indice de groupes OH selon DIN 53240, section 2, valant jusqu'à 600 mg de KOH/g.

7. Matière de revêtement selon l'une quelconque des revendications précédentes, **caractérisée en ce que** le composé silylé (S) consiste en un composé de formule
(R¹-O-)ₙ-Si-R²₍₄₋ₙ₎,
dans laquelle
R¹ représente un groupe alkyle en C₁-C₂₀, de préférence un groupe alkyle en C₁-C₄,
n représente un nombre entier valant de 1 à 3, de préférence 3.

8. Matière de revêtement selon la revendication 7, **caractérisée en ce que** le groupe R² améliore la compatibilité avec les autres composants de la matière de revêtement.

9. Matière de revêtement selon la revendication 7, **caractérisée en ce que** R² est choisi dans l'ensemble constitué par des groupes alkyle en C₁-C₂₀, aryle en C₆-C₁₂ et cycloalkyle en C₅-C₁₂.

10. Matière de revêtement selon l'une quelconque des revendications précédentes, **caractérisée en ce que** (S) est choisi dans le groupe constitué par l'iso-octyltriméthoxysilane, l'iso-octyltriéthoxysilane, le n-butyl-triméthoxysilane, le n-butyltriéthoxysilane, l'isobutyltriméthoxysilane, l'isobutyltriéthoxysilane, le phényltriméthoxysilane et le phényltriéthoxysilane.

11. Procédé pour le revêtement de subjectiles, **caractérisé en ce qu'**on mélange entre eux la composition de polyisocyanate (A) et les liants (B) et (C), tels que définis dans les revendications précédentes, en un rapport molaire des groupes isocyanate dans (A) aux groupes réactifs vis-à-vis d'isocyanates dans (B) et (C) de 0,1:1 à 10:1, éventuellement en pouvant encore incorporer d'autres composants utilisés anormalement dans des peintures, et on applique ensuite ce mélange sur le subjectile.

12. Utilisation de matières de revêtement selon l'une quelconque des revendications 1 à 10, pour le revêtement d'éléments de construction, des revêtements sur des (grands) véhicules et des aéronefs et des applications industrielles, des véhicules utilitaires dans le domaine agricole et du bâtiment, des revêtements de peintures décoratives, le revêtement de ponts, de bâtiments, de pylônes, de cuves, de conteneurs, de popelines, de centrales électriques, d'installations chimiques, de bateaux, de grues, de poteaux, de cloisons de palplanches, d'accessoires, de tubes, de garnitures, de brides, de dispositifs d'accouplement, de hangars, de tortures et d'acier de construction, de meubles, fenêtres, portes, parquet, le revêtement de boîtes *can-coating* et le revêtement de rubans continus *coil-coating*, pour des revêtements de sol, des aires de stationnement ou dans des peintures pour automobiles en tant qu'OEM et l'application de retouches.
